# EUROPÄISCHE PATENTANMELDUNG

(11) **EP 3 760 406 A1**
(43) Veröffentlichungstag der Anmeldung: **06.01.2021**
(21) Anmeldenummer: 19184050.3
(22) Anmeldetag: 03.07.2019
(51) Int. Cl.: B28D 7/02, B23D 59/02, B23D 47/12, B28D 1/04

(54) **RINGSÄGE MIT WASSERSPÜLUNG**

(71) Anmelder: Hilti Aktiengesellschaft, 9494 Schaan (LI)
(72) Erfinder: Koslowski, Oliver, 86932 Pürgen (DE); Brehm, Bernhard, 57365 Calf (DE); Taack-Trakranen, John Van, 81475 Muenchen (DE); Golubovic, Goran, 86807 Buchloe (DE); Schittl, Josef, 6712 Thueringen (AT)
(74) Vertreter: Hilti Aktiengesellschaft Corporate Intellectual Property

(57) **Zusammenfassung**

Eine Ringsäge 2 hat eine Werkzeughalterung 5 zum Führen eines Ringsägeblatts 1 . Die Werkzeughalterung ist in einem Aufnahmeraum 33 angeordnet. Ein Antriebsrad 6 dient zum Antreiben des Ringsägeblatts und ist in der Schneidebene angeordnet und mit dem Motor gekoppelt. Eine Führungsrolle ist auf einer Seite der Schneidebene zum Führen des Ringsägeblatts von der einen Seite angeordnet. Eine Wasserspülung 81 hat einen Auslass 85, welcher auf die Führungsrolle 41 gerichtet ist.

## Beschreibung

### GEBIET DER ERFINDUNG

Die vorliegende Erfindung betrifft eine Ringsäge.

Ringsäge treiben ein Ringsägeblatt exzentrisch durch ein Antriebsrad an. Der exzentrische Antrieb benötigt eine Führung des Ringsägeblatt, welche durch Walzen und Rädern realisiert wird. Hierbei können hohe Reibungsverluste zwischen den Walzen und dem Ringsägeblatt entstehen. Ferner ist der Wechsel des Ringsägeblatts aufwändig, insbesondere das Antriebsrad und Walzen für eine gute Führung neu justiert werden müssen.

Das Ringsägeblatt wird mit durch Wasser gekühlt. Das Wasser transportiert Staub und Schlamm in die Ringsäge. Der abrasive Staub bzw. Schlamm führt zu einem hohen Verschleiß.

### OFFENBARUNG DER ERFINDUNG

Gemäß einem Aspekt der Erfindung hat eine Ringsäge eine Werkzeughalterung zum Führen eines Ringsägeblatts. Die Werkzeughalterung ist in einem Aufnahmeraum angeordnet. Ein Antriebsrad dient zum Antreiben des Ringsägeblatts und ist in der Schneidebene angeordnet und mit dem Motor gekoppelt. Eine Führungsrolle ist auf einer Seite der Schneidebene zum Führen des Ringsägeblatts von der einen Seite angeordnet. Eine Wasserführung hat einen Auslass, welcher auf die Führungsrolle gerichtet ist. Die Führungsrolle wird durch das Wasser gereinigt, welches danach das Ringsägeblatt kühlt.

Eine bevorzugte Ausführungsform sieht vor, dass die Führungsrolle in Strömungsrichtung der Wasserspülung vor dem Aufnahmeraum angeordnet ist. Die Führungsrolle kann einen zylindrischen Wälzkörper zum Eingreifen in Führungsnuten des Ringsägeblatts aufweisen. Der Auslass ist auf eine Mantelfläche des Wälzkörpers oder auf eine von Schneidebene abgewandte Fläche gerichtet. Das Wasser kommt zuerst mit der Mantelfläche in Kontakt, bevor das Wasser auf das staubige oder schlammige Ringsägeblatt gelangt.

Eine Ausgestaltung sieht vor, dass die Wälzkörper in einem Topf angeordnet sind, welcher gegenüber einem Maschinengehäuse abgedichtet ist und eine zu dem Aufnahmeraum hinweisende Öffnung aufweist. Ein Segment der Wälzkörper kann innerhalb des Aufnahmeraums und ein Segment der Wälzkörper kann innerhalb des Topfs angeordnet sein. Die Öffnung ist vorzugsweise kleiner als ein Querschnitt des Wälzkörpers.

In einer Ausgestaltung ist der Auslass innerhalb des Topfs angeordnet. Ein Kanal, welcher mit dem Auslass verbunden ist, kann einen helixförmigen, um eine Drehachse der Führungsrolle verlaufenden Abschnitt aufweisen. Das Wasser kann in der Drehrichtung der Führungsrolle auf diese gelenkt werden.

Das erfindungsgemäße Ringsägeblatt hat einen flachen, ringförmigen Träger, der eine Seitenfläche und einen äußeren Umfang aufweist. Ein oder mehrere Schneidelemente sind entlang des äußeren Umfangs des Trägers angeordnet. In die Seitenfläche ist wenigstens eine ringförmige Nut eingesenkt. Die Nut hat eine radial innenliegende Flanke und eine radial außenliegende Flanke. Die radial innenliegende Flanke ist kegelförmig ausgebildet und ein die kegelförmige Flanke beschreibender Kegel hat einen halben Öffnungswinkel von zwischen 10 Grad und 30 Grad. Das Ringsägeblatt ermöglicht eine reibungsarme Führung über die geneigten Flanken. Eine Führungsrolle kann sich näherungsweise parallel zu einer Rotationsachse des Ringsägeblatt drehen und dabei an der Nut anliegen. Zudem kann die Führungsrolle einen größeren Durchmesser als die Breite der Nut aufweisen. Die Orientierung der Führungsrolle und deren möglicher Durchmesser tragen maßgeblich zu einem geringen Reibungsverlust bei.

Vorzugsweise verläuft die radial außenliegende Flanke durchgehend unterhalb, d.h. auf einer dem Träger zugewandten Seite, eines beschreibenden Kegelmantels verläuft, welcher senkrecht auf der innenliegenden Flanke steht und welcher durch einen von der Seitenfläche am weitest entfernten Punkt der innenliegenden Flanke, also deren tiefsten Punkt, verläuft. Eine zylindrische Führungsrolle kann an der geneigten innenliegenden Flanke anliegen.

Ein Profil des Ringsägeblatts kann asymmetrisch sein. Vorzugsweise ist die außenliegende Flanke kegelförmig. Ein die kegelförmige Flanke beschreibender Kegel hat einen halben Öffnungswinkel zwischen 50 Grad und 80 Grad. Die asymmetrische Form bietet eine geringe Schwächung des Trägers durch einen minimalen Querschnitt der Nut.

Gemäß einem Aspekt der Erfindung hat eine Ringsäge eine Werkzeughalterung zum Führen eines Ringsägeblatts in einer Schneidebene E, einen Motor, ein Antriebsrad, wenigstens eine Führungsrolle und wenigstens eine Führungswalze. Das Antriebsrad ist zum Antreiben des Ringsägeblatts in der Schneidebene angeordnet und mit dem Motor gekoppelt. Die wenigstens eine Führungsrolle ist auf einer Seite der Schneidebene angeordnet. Die wenigstens eine Führungswalze ist an der gegenüberliegenden Seite der Schneidebene angeordnet. Die Führungsrolle ist um eine Drehachse frei drehbar gelagert. Die Drehachse ist gegenüber der Schneidebene um 50 Grad bis 80 Grad geneigt. Die Neigung der Führungsrolle ist näherungsweise parallel zu einer Rotationsachse des Ringsägeblatt und kann dennoch in einer Führungsnut des Ringsägeblatts anliegen. Zudem kann die Führungsrolle einen größeren Durchmesser als die Breite der Führungsnut aufweisen. Die Orientierung der Führungsrolle und deren möglicher Durchmesser tragen maßgeblich zu einem geringen Reibungsverlust bei.

Gemäß einer Ausgestaltung kann die Führungsrolle wenigstens einen Wälzkörper mit einer rotationssymmetrischen Mantelfläche aufweisen. In einer bevorzugten Ausgestaltung weist die Führungsrolle zwei oder mehr konzentrische Wälzkörper (46,) auf. Ein erster der Wälzkörper kann einen kleineren Radius wie ein zweiter der Wälzkörper aufweisen. Der erste der Wälzkörper ist gegenüber dem zweiten der Wälzkörper längs der Drehachse näher an der Schneidebene angeordnet. Das der Schneidebene E näheste Segment des ersten Wälzkörpers und das der Schneidebene E näheste Segment des zweiten Wälzkörpers liegen vorzugsweise in einer Ebene. Die beiden nähesten Segmente greifen vorzugsweise in die Führungsnuten des Ringsägeblatts ein.

In einer Ausgestaltung ist der erste der Wälzkörper auf dem zweiten der Wälzkörper gelagert. Das benötigte Lager wird nur mit der relativen Drehzahl des kleineren Wälzkörpers gegenüber dem größeren Wälzkörper belastet und nicht mit der viel höheren absoluten Drehzahl gegenüber dem Maschinengehäuse.

Der kleinere Wälzkörper dreht gegenüber einem Maschinengehäuse mit einer hohen absoluten Drehzahl. woraus eine hohe Belastung der Lager resultiert. Die Lagerung auf dem größeren, sich drehenden Wälzkörper verringert die relative Drehzahl, welche auf die Lager des kleineren Wälzkörpers wirken.

Eine Ausgestaltung sieht vor, dass eine Drehachse der Führungswalze und die Drehachse der Führungsrolle in einer zu der Schneidebene senkrechten Ebene liegen.

In einer bevorzugten Ausgestaltung ist die Drehachse der Führungswalze gegenüber der Schneidebene geneigt. Die Führungswalze kann konisch sein. Die Umfangsgeschwindigkeit der abrollenden Mantelfläche der Führungswalze nimmt von dem der Rotationsachse zugewandten Ende zu dem der Rotationsachse abgewandten Ende zu. Die Zunahme entspricht vorzugsweise etwa der größeren Umlaufgeschwindigkeit von weiter außenliegenden Bereichen des Ringsägeblatts gegenüber der Rotationsachse näheren Bereichen. Reibung der Führungswalze an dem Ringsägeblatt kann somit verringert werden.

Gemäß einem Aspekt der Erfindung hat eine Ringsäge eine Werkzeughalterung zum Führen eines Ringsägeblatts in einer Schneidebene E, einen Motor, ein Antriebsrad, wenigstens eine Führungsrolle und wenigstens eine Führungswalze. Das Antriebsrad ist zum Antreiben des Ringsägeblatts in der Schneidebene angeordnet und mit dem Motor gekoppelt. Die wenigstens eine Führungsrolle ist auf einer Seite der Schneidebene angeordnet ist, die wenigstens eine Führungswalze ist auf der gegenüberliegenden Seite der Schneidebene angeordnet. Die Ringsäge hat einen Lagerbock, in welchem das Antriebsrad um eine zu Schneidebene senkrechte Antriebsachse drehbar gelagert ist. Der Lagerbock ist parallel zu der Schneidebene verschiebbar. Der Aufbau mit dem verschiebbaren Antriebsrad ermöglicht ein werkzeugloses Entnehmen und Einsetzen des Ringsägeblatts.

Eine bevorzugte Ausführungsform weist ein Winkelgetriebe auf, das das Antriebsrad mit dem Motor koppelt. Das Winkelgetriebe hat ein mit dem Antriebsrad verbundenes Kronenrad. Das Kronenrad ist in dem Lagerbock gelagert. Das Antriebsrad und das Kronenrad bildet eine zusammen verschiebbare Einheit. Das Winkelgetriebe mit dem Kronenrad ist sehr unempfindlich gegenüber einer ungenauen Positionierung des Kronenrads. Hierdurch ergibt sich eine gute Toleranz beim Einsetzen leicht unterschiedlich breitere Ringsägeblätter.

Gemäß einem Aspekt der Erfindung hat eine Ringsäge eine Werkzeughalterung zum Führen eines Ringsägeblatts in einer Schneidebene, einen Motor, und ein Antriebsrad, das zum Antreiben des Ringsägeblatts in der Schneidebene angeordnet ist und das mit dem Motor gekoppelt ist. Das Antriebsrad ist in einem Lagerbock um eine zu der Schneidebene E senkrechte Antriebsachse drehbar gelagert. Eine Führungsroll ist auf einer Seite der Schneidebene zum Führen des Ringsägeblatts von dieser einen Seite angeordnet. Eine Führungswalze ist auf einer gegenüberliegenden Seite der Schneidebene zum Führen des Ringsägeblatts von dieser gegenüberliegenden Seite angeordnet. Die Führungswalze ist in einem gegenüber der Schneidebene schwenkbaren Haube angeordnet ist. Mit dem Öffnen der Haube erhält der Anwender Zugang zu der Werkzeughalterung. Zugleich werden die Führungswalzen von dem Ringsägeblatt abgehoben und die Verriegelung des Ringsägeblatt aufgehoben. Der Anwender kann das Ringsägeblatt werkzeuglos austauschen.

In einer Ausgestaltung kann die Werkzeughalterung einen Aufnahmeraum zum Aufnehmen des Ringsägeblatts aufweisen, wobei die Haube den Aufnahmeraum abdeckt. Das Antriebsrad, die Führungsrolle und die Führungswalze können in dem Aufnahmeraum angeordnet sein.

In einer Ausgestaltung ist vorgesehen, dass ein der Schneidebene zugewandter Abschnitt der Mantelfläche der Führungswalze parallel zu der Schneidebene verläuft.

In einer bevorzugten Ausführungsform ist die Haube an einem Maschinengehäuse verriegelbar. Die Haube kann über einen Betätigungshebel öffenbar und schließbar sein.

In einer weiteren bevorzugten Ausführungsform ist das Antriebsrad in der Schneidebene verschiebbar und eine Bewegung der Haube und des Antriebsrads sind über eine Mechanik synchronisiert. Ein Betätigungshebel kann eine öffnende Stellung und eine schließende Stellung aufweisen. Die Haube und das Antriebsrad sind mit dem Betätigungshebel derart gekoppelt, dass in der geschlossenen Stellung die Haube geschlossen und das Antriebsrad an das Ringsägeblatt angedrückt und in der öffnenden Stellung die Haube geöffnet und das Antriebsrad von dem Ringsägeblatt entfernt ist. Der Anwender benötigt keine aufwändige Justage oder Ausrichtung, um eine Ringsägeblatt zu wechseln.

Eine Ausführungsform sieht vor, dass der Betätigungshebel ausgehend von der schließenden Stellung in die öffnende Stellung zunächst das Antriebsrad verschiebt und danach die Haube öffnet.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: Ringsäge und Ringsägeblatt
- Fig. 2: Schnitt in der Ebene II-II
- Fig. 3: Nutprofil eines Ringsägeblatts, Schnitt III-III
- Fig. 4: Alternative Nutprofile des Ringsägeblatts
- Fig. 5: Schnitt in der Ebene V-V durch Führungsrolle und Führungswalze
- Fig. 6: Schnitt in der Ebene V-V bei geöffneter Haube
- Fig. 7: Antrieb
- Fig. 8: Mechanismus zum Entnehmen und Verriegeln eines Ringsägeblatts in geschlossener Stellung
- Fig. 9: Mechanismus zum Entnehmen und Verriegeln eines Ringsägeblatts, in einer Zwischenstellung
- Fig. 10: Mechanismus zum Entnehmen und Verriegeln eines Ringsägeblatts, in geöffneter Stellung

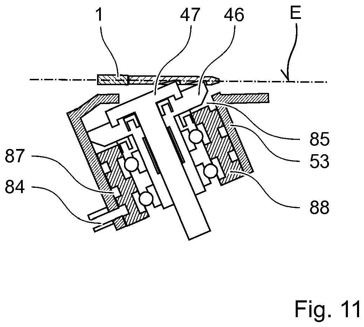

- Fig. 11: Wasserführung, Schnitt in der Ebene V-V

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

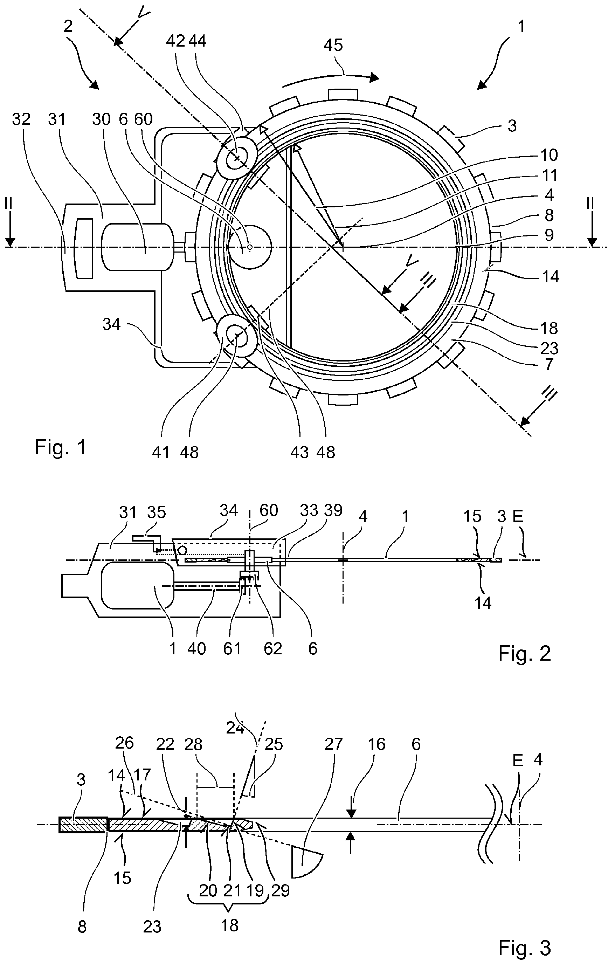

Eine schematische Darstellung eines Ringsägeblatts **1** und einer Ringsäge **2** sind in einer Draufsicht in Fig. 1 und in einem vertikalen Schnitt in der Ebene II-II dargestellt. Das Ringsägeblatt **1** hat die Gestalt einer flachen, ringförmigen Scheibe mit radial außenliegenden Schneidelementen **3.** Die Gestalt gibt eine Rotationsachse **4** vor, um welche das Ringsägeblatt **1** verwendungsgemäß gedreht wird. Die Ringsäge **2** hat eine Werkzeughalterung **5,** in welcher das Ringsägeblatt **1** um jene Rotationsachse **4** drehbar gelagert ist. Ein Antrieb erfolgt exzentrisch zu der Rotationsachse **4** mittels eines Antriebsrads **6,** welches an einem kreisförmigen, innenliegenden Umfang des hohlen Ringsägeblatts **1** anliegt.

Die Beschreibung des Ringsägeblatts **1** führt in Anlehnung an die bestimmungsgemäße Verwendung und an die zylindrische Symmetrie des Ringsägeblatts **1** die Rotationsachse **4** und eine zu der Rotationsachse **4** senkrecht orientierte Schneidebene **E** ein. Der Kreuzungspunkt von Rotationsachse **4** und Schneidebene **E** fällt mit der geometrischen Mitte oder dem Schwerpunkt des Ringsägeblatts **1** zusammen. Die Schneidebene **E** entspricht der Ebene, in welcher das Ringsägeblatt **1** ein Werkstück, Untergrund, etc. schneidet. In der nachfolgenden Beschreibung beziehen sich die Richtungsangaben axial und radial auf die Rotationsachse **4,** soweit nicht explizit anders angegeben. Ein radial innenliegendes Element ist näher der Rotationsachse **4** angeordnet, wie ein radial außenliegendes Element, welches umgekehrt näher an dem äußeren Umfang des Ringsägeblatts **1** angeordnet ist.

Das Ringsägeblatt **1** hat einen hohlkreis-förmigen, flachen Träger **7.** Der hohlkreis-förmige Träger **7** ist in radialer Richtung durch einen äußeren Umfang **8** und einen inneren Umfang **9** begrenzt. Der äußere Umfang **8** und der innere Umfang **9** sind konzentrisch und symmetrisch zu der Rotationsachse **4.** Der innere Umfang **9** ist kreisförmig, der äußere Umfang **8** ist vorzugsweise kreisförmig oder näherungsweise kreisförmig. Der äußere Umfang **8** verläuft im Abstand eines äußeren Radius **10** zu der Rotationsachse **4.** Der innere Umfang **9** ist analog durch einen inneren Radius **11** in Bezug zu der Rotationsachse **4** beschrieben. Eine Breite des Trägers **7** bezeichnet die Differenz des äußeren Radius **10** zu dem inneren Radius **11.** Ein Verhältnis des inneren Radius **11** zu dem äußeren Radius **10** ist vorzugsweise größer als 50 %, z.B. größer als 66 %. Eine hohlkreis-förmige Frontalseite **14** und eine hohlkreis-förmige Rückseite **15** schließen den Träger **7** längs der Rotationsachse **4** ab. Die Rückseite **15** ist vorzugsweise eben und unstrukturiert. Die Rückseite **15** kann parallel zu der Schneidebene **E** sein. Die Frontalseite **14** ist vorzugsweise im Wesentlichen eben und vorzugsweise parallel zu der Schneidebene **E.** Eine Höhe **16** des flachen Trägers **7,** d.h. dessen Abmessung längs der Rotationsachse **4,** ist deutlich geringer als die Radii.

Die Frontalseite **14** des Trägers **7** hat eine im Wesentlichen ebene, typischerweise parallel zu der Schneidebene **E** verlaufende, Hauptfläche **17** und wenigstens eine ringförmige (Führungs-) Nut **18.** Die Führungsnut **18** ist konzentrisch zu dem inneren Umfang **9** des Trägers **7,** d.h. verläuft in einem konstanten Abstand um die Rotationsachse **4.** Führungsnut **18** ist weitgehend rotationssymmetrisch ausgebildet. Ein Profil der Führungsnut **18** ist gleichbleibend entlang der Umlaufs um die Rotationsachse. Das Profil bezeichnet den Querschnitt in einer die Rotationsachse **4** enthaltenen Ebene, z.B. Ebene III-III wie in Fig. 3. Das Profil der dargestellten Führungsnut **18** hat eine radial innenliegende Führungsflanke **19,** eine radial außenliegende Flanke **20** und einen zwischen Führungsflanke **19** und außenliegender Flanke **20** angeordneten Nutboden **21.** Der Nutboden **21** bildet den tiefsten Bereich der Führungsnut **18,** d.h. der Nutboden **21** ist der der Rückseite **15** nächste Bereich der Nut **18.** Die Tiefe **22** der Führungsnut **23** bezeichnet den Abstand des Nutbodens **21** zu der Hauptfläche **17** der Frontalseite 1. Der beispielhafte Nutboden **21** ist eben und parallel zu der Schneidebene **E.** In anderen Ausführungsformen kann der Nutboden **21** eine kreisförmige Linie ohne Ausdehnung sein, in welcher die Führungsflanke **19** und die außenliegende Flanke **20** einander berühren. Die Führungsflanke **19** und die außenliegende Flanke **20** verlaufen jeweils von der Hauptfläche **17** zu dem Nutboden **21.**

Die Führungsflanke **19** steigt längs einer radialer Richtung hin zu der Rotationsachse **4** in axialer Richtung von dem Nutboden **21** zu der Hauptfläche **17** an. Die Führungsflanke **19** ist kegelförmig. Der beschreibende Kegel **24** ist symmetrisch zu der Rotationsachse **4,** eine Spitze des Kegels liegt bezogen auf die Schneidebene **E** auf der gleichen Seite wie die Frontalseite **14** und die Führungsnut **18.** Ein halber Öffnungswinkel **25** des Kegels **24** ist geringer als 30 Grad, vorzugsweise geringer als 25 Grad, und größer als 10 Grad, vorzugsweise größer als 15 Grad. Die Führungsflanke **19** ist steil gegenüber der Schneidebene **E,** jedoch ohne senkrecht zu sein.

Die außenliegende Flanke **20** fällt längs einer radialer Richtung hin zu der Rotationsachse **4** in axialer Richtung von der Hauptfläche **17** des Frontalseite **14** zu dem Nutboden **21** ab. Die Flanke **20** verläuft durchgehend unterhalb oder auf einem Kegel **26,** der durch die Führungsflanke **19** und Tiefe **22** der Führungsnut **18** vorgegeben ist. Dieser begrenzende Kegel **26** steht senkrecht auf der kegelförmigen Führungsflanke **19** und verläuft durch den tiefsten Punkt der Führungsflanke **19.** Unterhalb bezeichnet hierbei, dass die Flanke **20** seitig der Rückseite **15** von dem Kegel **26** ist. Der Kegel **26** verläuft somit durch den Hohlraum der Führungsnut **18** und in Richtung zu der Rotationsachse **4** erst bei der Führungsflanke **19** in den Träger **7** ein. Die Führungsflanke **19** ist durchgehend oberhalb des Kegelmantels. Die abgewandte Flanke **20** kann in unterschiedlichen Ausführungen ausgebildet sein. Die Flanke **20** fällt vorzugsweise monoton ab. In einer bevorzugten Ausführungsform hat die abgewandte Flanke **20** eine kegelförmige Gestalt. Der beschreibende Kegel ist symmetrisch zu der Rotationsachse **4;** eine Spitze des Kegels liegt auf der Frontalseite **14** abgewandten Seite des Trägers **7.** Ein halber Öffnungswinkel **27** des Kegels ist größer als 50 Grad, vorzugsweise größer als 60 Grad, und vorzugsweise kleiner als 75 Grad, z.B. kleiner als 70 Grad. Die außenliegende Flanke **20** ist somit deutlich länger als die Führungsflanke **19.**

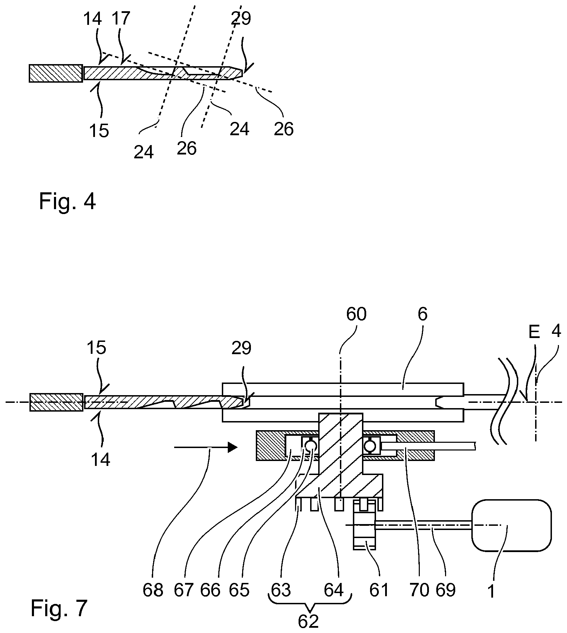

Die Führungsnut **18, 23** hat ein stark asymmetrisches Profil. Eine Summe der halben Öffnungswinkel **25, 27** der die Führungsflanke **19** und die abgewandte Flanke **20** beschreibenden Kegel ist vorzugsweise größer als 90 Grad, vorzugsweise geringer als 120 Grad. Die Führungsflanke **19** trägt nur geringfügig, z.B. weniger als 20 %, zu der Breite **28** der Führungsnut **18,** d.h. deren radialen Abmessung, bei. Den Hauptteil der Breite **28** nehmen die andere Flanke **19** und der Nutboden **21** ein. Die Breite **28** ist wenigstens dreifach, z.B. wenigstens vierfach, so groß wie eine Tiefe **22** der Führungsnut **18,** d.h. deren Abmessung längs der Rotationsachse **4.** Die Ausführungsform mit einer langgezogenen abgewandten Flanke **20** ist bevorzugt, da dieses Hohlprofil eine vergleichsweise geringe Querschnittsfläche hat. Der Träger **7** ist somit stabiler. Dies gilt insbesondere, wenn zwei oder mehr Führungsnuten vorgesehen sind. In einer anderen Ausführungsform nimmt der Nutboden wenigstens drei Viertel der Breite der Nut ein. Die andere Flanke kann durch einen Kegel mit ähnlichem Öffnungswinkel wie die Führungsflanke beschrieben sein, vgl. Fig. 4. Die Frontalseite **14** kann zwei Führungsnuten **18, 23** aufweisen. Die beiden Führungsnuten **18, 23** sind zueinander konzentrisch. In der dargestellten Ausführungsform weisen beide Führungsnuten **18, 23** das gleiche Profil auf. Die Führungsnuten **18, 23** unterscheiden sich nur in ihrem Radius.

Der innere Umfang **9** des Trägers **7** dient als Lauffläche **29.** Die Lauffläche **29** kann stumpf oder gerundet sein oder wie bevorzugt einen trapezförmigen Querschnitt aufweisen. Die Lauffläche **29** hat die Form eines Rotationskörpers, dessen Symmetrieachse mit der Rotationsachse **4** zusammenfällt.

Beim Schneiden eines Untergrunds mit dem Ringsägeblatt **1** taucht das Ringsägeblatt **1** in der Schneidebene **E** in den Untergrund ein. Entlang des äußeren Umfangs **8** des Trägers **7** sind die Schneidelemente **3** in der Schneidebene **E** angeordnet. Die Schneidelemente **3** stehen in radialer Richtung von dem Träger **7** ab. Ferner stehen die Schneidelemente **3** auch beiden axialen Richtungen gegenüber dem Träger **7** vor. Die Schneidelemente **3** sind somit dicker als der Träger **7,** d.h. haben eine größere Abmessung längs der Rotationsachse **4.** Der von den Schneidelementen **3** geschnittene Schlitz ist ausreichend breit, so dass der Träger **7** in den Schlitz eingeführt werden kann. Die Schneidelemente **3** können abrasiv oder spanend sein. Beispielsweise enthalten die Schneidkörper Diamantpartikel oder ähnlich harte Körner, welche in einer Matrix eingebettet sind. Der Träger **7** ist vorzugsweise aus einem Stahl gefertigt.

Die Ringsäge **2** ist vorzugsweise eine handgehaltene Werkzeugmaschine oder Handwerkzeugmaschine. Die Ringsäge **2** hat eine Werkzeughalterung **5** zum Führen eines Ringsägeblatts **1.** Ein Motor **30** dient zum Antreiben des in der Werkzeughalterung **5** geführten Ringsägeblatt **1.** Der Motor **30** ist in einem Maschinengehäuse **31** angeordnet. Ein Handgriff **32** zum Halten und Führen der Ringsäge **2** während des Sägens ist an dem Maschinengehäuse **31** angeordnet. Die Ringsäge **2** hat vorzugsweise zwei Handgriffe oder einen Handgriff, der mit zwei Händen gegriffen werden kann. Ein beispielhafter Handgriff ist als Bügel ausgebildet. Der Handgriff **32** ist an einem Maschinengehäuse **31** der Ringsäge **2** angeordnet.

Die Werkzeughalterung **5** kann durch den Anwender ohne Werkzeug verriegelt und entriegelt werden, um das Ringsägeblatt **1** einzulegen bzw. zu entnehmen. Die Werkzeughalterung **5** basiert auf mehreren Rollen, welche an den gegenüberliegenden Seitenflächen **14, 15** des Ringsägeblatts **1** anliegen. Die Werkzeughalterung **5** hat einen Aufnahmeraum **33** für das Ringsägeblatt **1,** welcher vorzugsweise durch eine Haube **34** abgedeckt ist. Der Anwender kann die Haube **34** von dem Maschinengehäuse **31** abnehmen oder gegenüber dem Maschinengehäuse **31** aufklappen, verschwenken, etc.. Das Öffnen und Schließen der Haube **34** sowie das Entriegeln und Verriegeln der Werkzeughalterung **5** kann beispielsweise durch einen Betätigungshebel **35** erfolgen.

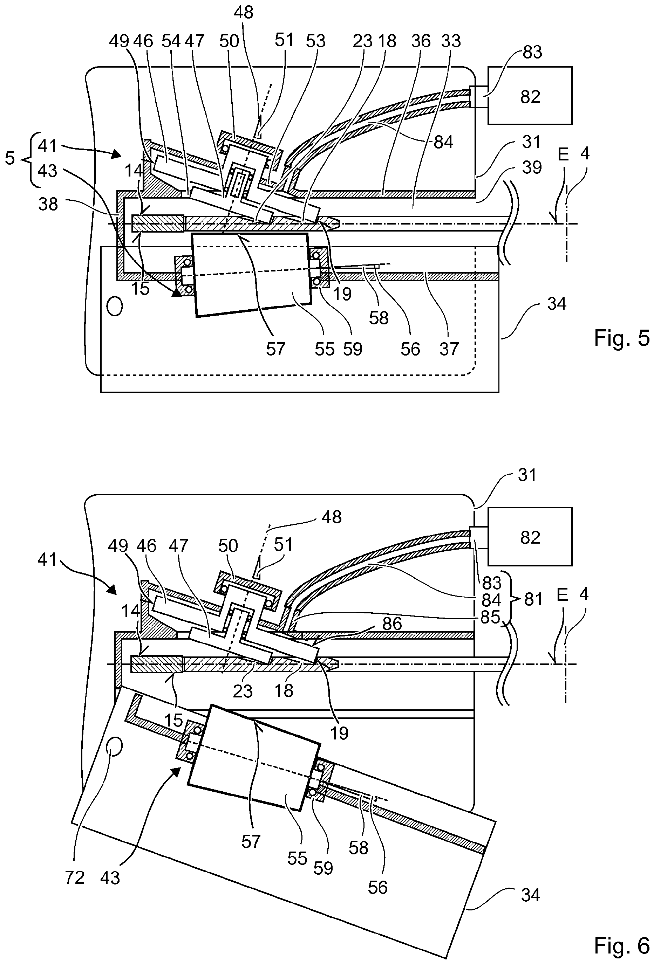

Die nachfolgende Beschreibung der Werkzeughalterung **5** bezieht sich auf deren verriegelte Stellung, wie sie im Betreib der Ringsäge **2** sinngemäß im Betrieb verwendet wird (Fig. 5).

Die Werkzeughalterung **5** hat einen Aufnahmeraum **33** für das Ringsägeblatt **1.** Der Aufnahmeraum **33** ist vorzugsweise längs der Rotationsachse **4** durch einen Boden **36** und ein Dach **37** und in radialer Richtung durch eine Seitenwand **38** umschlossen. Der Boden **36** ist auf einer Seite, das Dach **37** auf der gegenüberliegenden Seite des Schneidebene **E** angeordnet. Boden **36** und Dach **37** verlaufen im Wesentlichen längs der Schneidebene **E.** Die Seitenwand **38** verläuft in Umfangsrichtung um die Rotationsachse **4** und kann zylindrisch ausgebildet sein. Der Aufnahmeraum **33** hat eine Eintrittsöffnung **39** und eine Austrittsöffnung durch welche das Ringsägeblatt **1** in den Aufnahmeraum **33** eintreten bzw. austreten kann. Der Boden **36** kann durch eine Außenfläche des Maschinengehäuses **31** gebildet sein. Das Dach **37** kann durch eine Innenfläche der Haube **34** gebildet sein. Der Aufnahmeraum **33** ist vorzugsweise gegenüber dem Maschinengehäuse **31** staub- und wasserdicht ausgebildet, um Elektromotor **30,** Getriebe **40,** etc. der Ringsäge **2** gegenüber von dem Ringsägeblatt **1** eingebrachten Sägestaub oder Wasser zu schützen.

Die Werkzeughalterung **5** der Ringsäge **2** ist innerhalb des Aufnahmeraums **33** angeordnet. Die Werkzeughalterung **5** basiert auf Führungsrollen **41, 42** und Führungswalzen **43, 44.** Die Führungsrollen **41, 42** sind auf einer Seite der Schneidebene **E,** die Führungswalzen **43, 44** auf der gegenüberliegenden Seite der Schneidebene **E** angeordnet. Die beispielhaften Führungsrollen **41, 42** ragen gegenüber dem Boden **36** in den Aufnahmeraum **33** vor. Die beispielhaften Führungswalzen **43, 44** ragen ausgehend von dem Dach **37** in den Aufnahmeraum **33** vor. Die Führungsrollen **41, 42** greifen in die Führungsnuten **18, 23** des Ringsägeblatts **1** ein. Die Führungswalzen **43, 44** liegen an der vorzugweise glatten Rückseite **15** des Ringsägeblatts **1** an. Die beispielhafte Ringsäge **2** hat zwei Führungsrollen **41, 42,** welche längs einer Umlaufrichtung **45** um die Rotationsachse **4** versetzt angeordnet sind. Andere Ausführungsformen haben nur eine Führungsrolle oder bis zu vier Führungsrollen. Die Führungswalzen **43, 44** sind den Führungsrollen **41, 42** vorzugsweise gegenüberliegend angeordnet, d.h. in gleicher Winkelposition um die Rotationsachse **4.** Das Paar aus einer Führungsrolle **41** und einer gegenüberliegender Führungswalze **43** klemmt das Ringsägeblatt **1** zwischen sich ein. Ein axialer Abstand zwischen Führungsrolle **41** und Führungswalze **43** entspricht der Dicke **16** des vorgesehenen oder eingelegten Ringsägeblatts **1.**

Die Führungsrolle **41** hat wenigstens einen Wälzkörper **46, 47,** welcher um eine Drehachse **48** drehbar gelagert ist. Die Drehachse **48** und der Wälzkörper **46** sind gegenüber der Schneidebene **E** derart geneigt, dass ein der Rotationsachse **4** zugewandter Abschnitt des Wälzkörpers **46** in die Führungsnut **18** eingreift. Ein von der Rotationsachse **4** abgewandter Abschnitt des Wälzkörpers **46** ist entsprechend von dem Ringsägeblatt **1** längs der axialen Richtung beabstandet. Der Wälzkörper **46** hat eine rotationssymmetrische Mantelfläche **49.** Die beispielhafte Mantelfläche **49** ist zylindrisch ausgeformt. Die Mantelfläche **49** liegt an der Führungsnut **18** des Ringsägeblatts **1** an. Das sich angetriebene Ringsägeblatt **1** bewegt den Wälzkörper **46,** dito die Führungsrolle **41.** Die geneigte Ausrichtung der Führungsrolle **41** ermöglicht ein reibungsfreies oder reibungsarmes Mitnehmen der Führungsrolle **41** durch das Ringsägeblatt **1.** Die geringe Reibung erhöht die Effizienz der Ringsäge **2** und Lebensdauer der Führungsrollen **41.**

Die Führungsrolle **41** bzw. die Wälzkörper **46, 47** der Führungsrolle **41** sind kraftfrei und reibungsarm um die Drehachse **48** drehbar gelagert. Die Führungsrolle **41** ist zwar nicht unmittelbar durch den Motor **30** angetrieben. Jedoch wird die Führungsrolle **41** durch die Mitnahme über das Ringsägeblatt **1** bewegt. Das große Verhältnis des Durchmessers des Ringsägeblatts **1** zu dem Durchmesser des Wälzkörpers **46** bedingt hohe Drehzahlen des Wälzkörpers **46.** Der Wälzkörper **46** ist daher vorzugsweise in einem reibungsarmen Lager **50,** z.B. einem Kugellager, gelagert, um Reibungsverluste aufgrund der schnell drehenden Führungsrolle **41** zu vermeiden. Beispielsweise ist der Wälzkörper **46** in einem Kugellager gelagert.

Die Drehachse **48** ist, wie erwähnt, gegenüber der Schneidebene **E** geneigt. Die Drehachse **48** kann mit der Rotationsachse **4** in einer Ebene liegen. In der dargestellten Ausführungsform sind Rotationsachse **4** und Drehachse **48** windschief angeordnet. Rotationsachse **4** und Drehachse **48** sind kreuzen sich nicht und sind nicht parallel. Der der Rotationsachse **4** nächste Punkt der Drehachse **48** liegt auf der gleichen Seite der Schneidebene **E** wie die Führungsrolle **41.** Ausgehend von der Führungsrolle **41** verläuft die Drehachse **48** in radialer Richtung auf die Rotationsachse **4** zu und entfernt sich dabei von der Schneidebene **E** und der Frontalseite **14** des Ringsägeblatts **1.** Die Neigung der Drehachse **48** gegenüber der Schneidebene **E** überträgt sich auf eine Neigung des Wälzkörpers **46,** der mit zunehmenden Abstand von der Rotationsachse **4** einen größeren Abstand zu der Schneidebene **E** aufweist. Der Neigungswinkel **51** der Drehachse **48** gegenüber einem Lot auf die Schneidebene **E** ist geringer als 30 Grad, vorzugsweise geringer als 25 Grad, und größer als 10 Grad, vorzugsweise größer als 15 Grad. Bei dem beispielhaften zylindrischen Wälzkörper **46** ist der Neigungswinkel **51** gleich der Neigung der Führungsflanke **19,** der für die Ringsäge **2** vorgesehenen Ringsägeblätter **1.**

Die Anzahl der Wälzkörper **46, 47** ist an die Anzahl der Führungsnuten **18, 23** der vorgesehenen Ringsägeblätter **1** angepasst. Die dargestellte und bevorzugte Ausführungsform hat zwei Wälzkörper **46, 47.** Andere Ausführungsformen haben einen Wälzkörper **46** oder bis zu vier Wälzkörper. Die Wälzkörper **46, 47** sind koaxial angeordnet und um die gleiche Drehachse **48** drehbar gelagert. Die Radii der Wälzkörper **46, 47** bzw. deren Mantelflächen **49** sind unterschiedlich. Die innere Führungsnut **18** ist weiter von der Drehachse **48** beabstandet wie die äußere Führungsnut **23** des eingelegten Ringsägeblatts **1.** Entsprechend hat der Wälzkörper **46** zugehörig zu der inneren Führungsnut **18** einen größeren Radius wie der Wälzkörper **47** zugehörig zu der äußeren Führungsnut **23.** Der kleinere Wälzkörper **47,** zumindest dessen Mantelfläche, zugehörig zu der inneren Führungsnut **18** ist längs der Drehachse **48** gegenüber der dem größeren Wälzkörper **46** zugehörig zu der äußeren Führungsnut **18** in Richtung zu der Schneidebene **E** hin versetzt angeordnet. Der Versatz zwischen dem kleineren Wälzkörper **47** und dem größeren Wälzkörper **46** ist derart, dass deren der Rotationsachse **4** zugewandte Abschnitte in gleichem Abstand zu der Schneidebene **E** sind. Der Versatz ist trigonometrisch durch den Unterschied der Radii und den Neigungswinkel **51** vorgegeben. Die beiden Wälzkörper **46, 47** greifen vorzugsweise gleich tief oder etwa gleich tief in die Führungsnuten **18, 23** ein.

Der kleinere Wälzkörper **47** rotiert aufgrund seines kleineren Radius und zusätzlich dem größeren Umfang der äußeren Führungsnut **23** deutlich schneller als der größere Wälzkörper **46.** Der kleinere Wälzkörper **47** ist daher vorzugsweise nicht unmittelbar in dem Maschinengehäuse **31** gelagert. In einer bevorzugten Ausführungsform ist der kleinere Wälzkörper **47** auf dem größeren Wälzkörper **46** gelagert. Das Lager, z.B. ein Kugellager, wird nur in Hinblick auf eine Differenzgeschwindigkeit der beiden Wälzkörper beansprucht. Der größere Wälzkörper **46** ist in einem in dem Maschinengehäuse **31** befestigten Lager **50** gelagert. Das Ringsägeblatt **1** stützt sich beim Sägen über seine Führungsnuten **18** in radialer Richtung **68,** d.h. in der Schneidebene **E,** an den Führungsrollen **41** ab. Die Führungsrollen **41** übertragen die Kräfte unmittelbar auf das Maschinengehäuse **31.**

Die beispielhaften Führungsrollen **41** sind in dem Maschinengehäuse **31** gelagert. Die Wälzkörper **46, 47** ragen in den Aufnahmeraum **33** hinein. Die Wälzkörper **46, 47** sind Staub und Wasser ausgesetzt. Damit Staub und Wasser nicht in das Maschinengehäuse **31** eindringt, sind zumindest die Wälzkörper **46, 47** der Führungsrolle **41** gegenüber dem Maschinengehäuse **31** gekapselt. Die Wälzkörper **46** sind in einem Topf **53** angeordnet, welcher gegenüber dem Maschinengehäuse **31** abgedichtet und zu dem Aufnahmeraum **33** hin offen ist. Der Topf **53** oder der Innenraum des Topfs **53** ist beispielsweise zylindrisch und koaxial zu der Drehachse **48** der Wälzkörper **46** ausgebildet. Der Topf **53** hat eine dem Aufnahmeraum **33** zugewandte Öffnung **54,** durch welche die Wälzkörper **46, 47** in den Aufnahmeraum **33** eintreten. Die Öffnung **54** liegt in einer Ebene mit dem Boden **36.** Die vorzugsweise gegenüber der Schneidebene **E** und dem Boden **36** geneigten Wälzkörper **46, 47,** können vollständig oder teilweise innerhalb dem Aufnahmeraum **33** angeordnet sein. Beispielsweise ragt nur ein dem Schneidebene **E** näheres Segment der Wälzkörper **46** durch die Öffnung **54** in den Aufnahmeraum **33.** Dieses Segment kontaktiert das Ringsägeblatt **1.** Das verbleibende Segment kann durch den Boden **36** gegenüber der Aufnahmeraum **33** verdeckt sein. Die zugehörige Öffnung **54** des Topfs **53** ist beispielsweise schlitzförmig oder kreissegmentförmig, entsprechend der Schnittfigur des geneigten Wälzkörpers **46** mit der Ebene des Bodens **36.** Das Volumen des Topfs **53** ist möglichst gering ausgebildet, damit sich in diesem kein Staub, dreckiges Wasser, etc. ablagern kann. Das Volumen des Topfs **53** ist beispielsweise maximal dreifach, z.B. maximal zweifach, z.B. maximal anderthalbfach, so groß wie das Volumen der Wälzkörpers **46, 47** der Führungsrolle **41.** Ein Durchmesser des Topfs ist etwa gleich dem Durchmesser der größeren Wälzkörpers **46,** z.B. maximal 30 % größer.

Die Führungswalze **43** hat einen Wälzkörper **55,** der um eine Drehachse **56** drehbar gelagert ist (Fig. 5). Der Wälzkörper **55** hat eine zylindrische oder vorzugsweise eine konusförmigen Mantelfläche **57.** Die Mantelfläche **57** ist parallel zu der Schneidebene **E** ausgerichtet, zumindest im Betrieb bzw. bei verriegelter Werkzeughalterung 5. Das Ringsägeblatt **1** liegt auf der Mantelfläche **57** parallel zu der Schneidebene E auf bzw. wird durch die Mantelfläche **49** abgestützt. Die Drehachse **57** ist weitgehend radial zu der Rotationsachse **4** orientiert angeordnet. Der Wälzkörper **55** kann dadurch reibungsarm an dem sich drehenden Ringsägeblatt **1** abrollen. Analog den Führungsrollen ist die Führungswalze **43** reibungsarm und kraftfrei gelagert. Der bevorzugte Wälzkörper **55** hat eine konusförmige Mantelfläche **55.** Der Radius des Wälzkörpers **55** nimmt mit abnehmendem Abstand zu der Rotationsachse **4** ab. Vorzugsweise ist das Verhältnis von Radius des Wälzkörpers **55** zu dem Abstand zu der Rotationsachse **4** längs der Drehachse **56** konstant oder näherungsweise konstant. Eine Abweichung von einem Mittelwert des Verhältnisses ist geringer als 2 %. Die Mantelfläche **57** wird beispielsweise durch einen Kegel beschrieben, dessen halber Öffnungswinkel 2 Grad bis 5 Grad beträgt. Der Neigungswinkel **58** der Drehachse **57** gegenüber der Schneidebene **E** ist gleich dem halben Öffnungswinkel. Die Drehachse **57** der Führungswalze **43** liegt vorzugsweise in einer Ebene mit der Drehachse **48** der gegenüberliegenden Führungsrolle **41.** Die Ebene ist zudem senkrecht zu der Schneidebene **E** oder parallel zu der Rotationsachse **4.** Auch wenn die Mantelflächen von Führungsrolle **41** und Führungswalze **43** zueinander geneigt sind, ergeben sich wegen der gleich orientierten Drehachsen keine oder nur geringe Scherkräfte zwischen Führungsflanke **19** und Rückseite **15.**

Bei der dargestellten und bevorzugten Ausführungsform hat die Werkzeughalterung **5** zwei Paare aus Führungsrolle **41** und Führungswalze **43.** Die Drehachse **48** der Führungsrolle **41** und die Drehachse **57** der Führungswalze **43** jeweils eines Paars liegen in einer Ebene. Die beiden Ebenen schneiden sich in einer Linie **K,** welche parallel zu der Rotationsachse **4** ist. Die Linie **K** kann auf der Rotationsachse **4** liegen oder zu der Rotationsachse **4** versetzt sein. Dies reflektiert die Möglichkeit dieser Ringsäge **2** Ringsägeblätter **1** mit unterschiedlichem Durchmesser aufnehmen zu können. Da die Position der Rotationsachse **4** durch die Führungsnuten **18** des Ringsägeblatts **1** definiert ist, ist die Position der Rotationsachse **4** relativ zu der Ringsäge **2** nur in dem Rahmen der vorgesehenen Ringsägeblätter **1** vorgegeben. Unbenommen dessen ist die Rotationsachse **4** für Richtungsangaben eine ausreichend definierte Referenz.

Die Werkzeughalterung **5** kann ohne Werkzeug entriegelt werden, um das Ringsägeblatt **1** zu entnehmen. Gemäß einer Ausführungsform ist vorgesehen, dass die Führungswalzen **43** von der Schneidebene **E** und ggf. dem eingelegten Ringsägeblatt **1** entfernt werden können, um die Fixierung längs der Rotationsachse **4** aufzuheben. Die Führungswalzen **43** sind beispielsweise an einer Innenseite der Haube **34** aufgehängt, wie schematisch in Fig. 6 dargestellt. An der Haube **34** können Drehlager **59** befestigt sein, in welchen die Führungswalzen **44** um die Drehachse **56** drehbar gelagert sind. Bei geschlossener Haube **34** liegen die Führungswalzen **43** an dem Ringsägeblatt **1** an, die Werkzeughalterung **5** ist wie oben beschrieben verriegelt. Mit dem Öffnen der Haube **34** werden die Führungswalzen **43** von der Schneidebene **E** und ggf. von dem eingelegten Ringsägeblatt **1** entfernt. Bei der beispielhaften Ausführungsform werden die Führungswalzen **44** zusammen mit der Haube **34** gegenüber der Schneidebene **E** verschwenkt. Die Werkzeughalterung **5** ist entriegelt und das Ringsägeblatt **1** kann entnommen werden. Vorzugsweise ist eine lösbare Sperre vorgesehen, welche ein versehentliches Öffnen der Haube **34** und ein damit einhergehendes Entriegeln der Werkzeugaufnahme verhindert.

Der Antrieb der Ringsäge **2** beinhaltet das Antriebsrad **6,** den beispielhaften Elektromotor **30** und ein Getriebe **40,** das den Elektromotor **30** mit dem Antriebsrad **6** koppelt (Fig. 7). Anstelle des Elektromotors **30** können andere Motoren, z.B. Verbrennungsmotoren, eingesetzt werden. Das Antriebsrad **6** ist in der Schneidebene **E** und exzentrisch zu der Rotationsachse **4** angeordnet. Eine Antriebsachse **60** des Antriebsrads **6** ist zu der Rotationsachse **4** versetzt. Vorzugsweise sind die Antriebsachse **60** und die Rotationsachse **4** parallel. Das Antriebsrad **6** rollt an der Lauffläche **29** des Ringsägeblatts **1** ab, d.h. an dem inneren Umfang **9** des Trägers **7.** Ein Durchmesser des Antriebsrads **6** ist entsprechend kleiner als der innere Radius **11** der für die Ringsäge **2** vorgesehenen Ringsägeblätter **1.** Das Getriebe **40** kann verschiedene Komponenten zum Anpassen von Drehzahl oder Drehmoment, Sicherheitskupplungen, etc. beinhalten.

Das Antriebsrad **6** lässt sich vorzugsweise in der Schneidebene **E** verschieben, um das Entnehmen des Ringsägeblatts **1** aus der Werkzeughalterung **5** zu erleichtern. Das Verschieben wird beispielsweise durch ein Winkelgetriebe **40** mit einem antriebsseitigen Ritzel **61** und einem abtriebsseitigen Kronenrad **62** ermöglicht (Fig. 7). Das Kronenrad **62** zeichnet sich durch Zähne **63** aus, die längs der Antriebsachse **60** von einer Grundplatte **64** vorstehen. Die Zähne **63** sind um einen zu der Antriebsachse **60** rotationssymmetrischen, z.B. zylindrischen, Hohlraum angeordnet. Die Zähne **63** können zylindrisch, prismatisch oder von anderer Gestalt sein. In einer bevorzugten Ausführungsform haben die Zähne **63** eine prismatische Gestalt, deren dreiecksförmige, prismatische Grundfläche tangential zum Umfang des Kronenrads **62** oder einem anderen Kreis um die Antriebsachse **60** orientiert ist. Das Antriebsrad **6** und das Kronenrad **62** sind in einem Lager **65** um die Antriebsachse **60** drehbar gelagert. Der Lagerbock **66** ist auf einem Schlitten **67** montiert, welcher längs einer radialen Richtung **68,** parallel zu der Schneidebene **E** verschiebbar ist. Der Schlitten **67** ist parallel zu einer Achse **69** des antriebsseitigen Ritzels **61** beweglich. Der Schlitten **67** kann beispielsweise über ein Gestänge **70** an einen Betätigungshebel **35** gekoppelt, über welchen der Anwender kann den Schlitten **67** verschieben kann. Vorzugsweise ist eine lösbare Sperre vorgesehen, welche den Schlitten **67** in der verriegelten Stellung der Werkzeughalterung **5** fixiert.

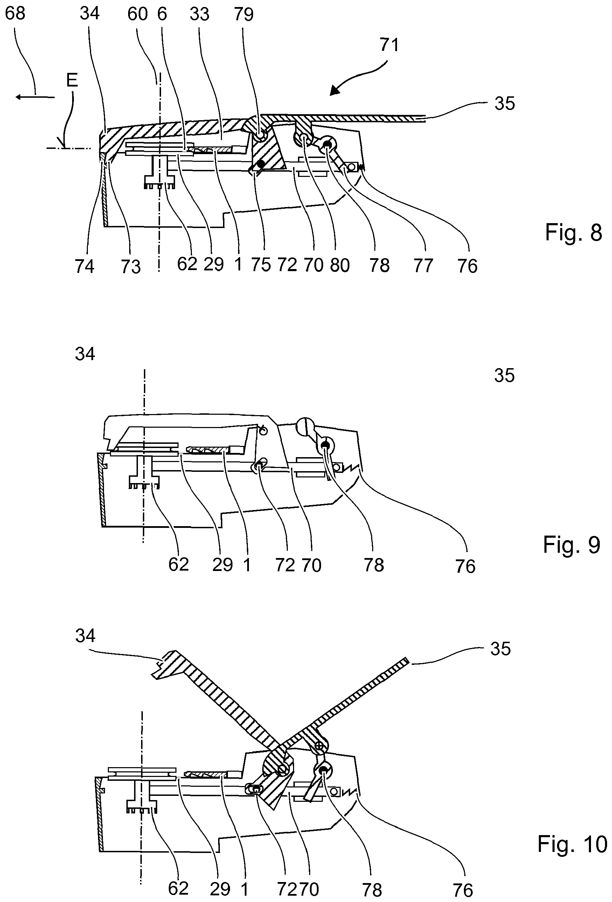

Der Anwender kann die Werkzeughalterung **5** vorzugsweise durch einen Betätigungshebel **35** verriegeln (Fig. 8) bzw. entriegeln (Fig. 10). Der Betätigungshebel **35** hat eine schließende Stellung (Fig. 8), in welcher die Werkzeughalterung **5** verriegelt ist, und eine öffnende Stellung (Fig. 10), in welcher die Werkzeughalterung **5** entriegelt ist. In der öffnenden Stellung des Betätigungshebels **35** ist der Kontakt der Führungswalzen **43** mit dem Ringsägeblatt **1** aufgehoben. Vorzugweise ist zudem der Kontakt des Antriebsrads **6** zu dem Ringsägeblatt **1** aufgehoben. Das Ringsägeblatt **1** liegt lose auf den Führungsrollen **41** auf, von denen es der Anwender abheben und entfernen kann. Beim Einlegen eines neuen Ringsägeblatts **1** legt der Anwender diese mit den Führungsnuten **18** auf die Führungsrollen **41** auf. Die Führungsnuten **18** sorgen bereits für eine korrekte Ausrichtung des Ringsägeblatts **1** in der Schneidebene **E.** Die Führungswalzen **43** werden ansprechend auf die schließende Stellung des Betätigungshebels **35** in Kontakt mit dem Ringsägeblatt **1** gebracht und somit die Werkzeughalterung **5** verriegelt. Vorzugsweise ist in der geschlossenen Stellung das Antriebsrad **6** in Kontakt mit dem Ringsägeblatt **1.**

Die Haube **34** verdeckt vorzugsweise die Werkzeughalterung **5** und das Antriebsrad **6.** Die Führungsrollen **41,** die Führungswalzen **43** und das Antriebsrad **6** sind bei geöffneter Haube **34** dem Anwender zugänglich, so dass der Anwender das Ringsägeblatt **1** entnehmen bzw. einlegen kann. Die Haube **34** wird vorzugsweise entsprechend der öffnenden Stellung und schließenden Stellung durch den Betätigungshebel **35** geöffnet und geschlossen. Der Betätigungshebel **35** kann zugleich die Haube **34** und die Werkzeughalterung **5** manipulieren.

Ein beispielhafter Betätigungshebel **35** und eine Mechanik **71** zur Manipulation von Werkzeughalterung **5** und Haube **34** ist in Zusammenhang mit Fig. 8 bis Fig. 10 dargestellt. Der Betätigungshebel **35** rastet in der schließenden Stellung ein. Eine von Werkzeughalterung **5** oder Haube **34** ausgehende Kraft drückt den Betätigungshebel **35** vorzugsweise in die schließende Stellung. In anderen Ausführungen kann der Betätigungshebel **35** durch einen Zapfen oder ähnliches in der schließenden Stellung durch den Anwender fixiert werden.

Die Haube **34** ist in der schließenden Stellung des Betätigungshebels **35** geschlossen. Die Haube **34** ist um ein Schwenkgelenk **72** gegenüber dem Maschinengehäuse **31** schwenkbar aufgehängt. Das Schwenkgelenk **72** ist ortsfest in dem Maschinengehäuse **31** angeordnet. Die Haube **34** hat vorzugsweise einen Verschluss, welcher ein versehentliches Aufklappen der Haube **34** verhindert. Der Verschluss muss durch den Betätigungshebel **35** gelöst werden. In der geschlossenen Stellung ist der Verschluss durch den Betätigungshebel **35** gesperrt. Ein beispielhafter Verschluss basiert auf einem Riegel **73,** der in eine Tasche **74** an dem Maschinengehäuse **31** eingreift. Der Riegel **73** ist beispielsweise als in radialer Richtung **68** vorspringende Nase an der Haube **34** ausgebildet. Die zugehörige Tasche **74** an dem Maschinengehäuse **31** hat eine in der radialen Richtung **68** zurückgezogene Vertiefung, welche vorzugsweise formschlüssig zu der Nase ausgebildet ist. Der Riegel **73** liegt an der Tasche **74** in einer Umfangsrichtung um das Schwenkgelenk **72** an. Hierdurch ist die Schwenkbewegung um dieses Schwenkgelenk **72** gehemmt. Der Riegel **73** kann längs der radialen Richtung **68** von der Tasche **74** entfernt werden. Riegel **73** und Tasche **74** überlappen nicht mehr längs der Umfangsrichtung um das Schwenkgelenk **72** und die Hemmung der Schwenkbewegung ist aufgehoben. Beispielsweise ist hierfür die Haube **34** längs der radialen Richtung **68** in dem Maschinengehäuse **31** verschiebbar. Die Haube **34** ist über ein Langloch **75** an dem Schwenkgelenk **72** angelegt. Das Langloch **75** verläuft vorzugsweise geneigt gegenüber der radialen Richtung **68.** Die Haube **34** kann somit um das Schwenkgelenk **72** geschwenkt und eine kurze Distanz längs der radialen Richtung **68** verschoben werden. Der Verschluss ist geschlossen, wenn das Schwenkgelenk **72** an dem Verschluss-nahen Ende des Langlochs **75** anliegt, und der Verschluss ist geöffnet, wenn das Schwenkgelenk **72** an dem Verschluss-fernen Ende des Langlochs **75** anliegt. Der Betätigungshebel **35** verschiebt die Haube **34** gegenüber dem Schwenkgelenk **72,** derart, dass in der geschlossenen Stellung der Haube **34** der Verschluss geschlossen ist. Ausgehend von der schließenden Stellung zu einer Zwischenstellung (Fig. 9) zieht der Betätigungshebel **35** die Haube **34** entgegen der radialen Richtung **68** und zieht den Riegel **73** aus der Tasche **74.** Ausgehend von der Zwischenstellung zu der öffnenden Stellung wird die Haube **34** um das Schwenkgelenk **72** verschwenkt. Zusammen mit der Haube **34** werden die Führungswalzen **43** gegenüber der Schneidebene **E** und ggf. dem Ringsägeblatt **1** verschwenkt.

Der Betätigungshebel **35** ist mit dem Gestänge **70** zum Verschieben des Antriebsrads **6** gekoppelt. Das bewegliche Antriebsrad **6** kann durch eine Feder **76** in die entriegelnde Stellung vorgespannt sein. Beispielsweise drückt die Feder **76** auf das Gestänge **70** in die radiale Richtung **68** hin zu der Rotationsachse **4.** Der Betätigungshebel **35** gibt in seiner offenen Stellung das Gestänge **70** frei, welches sich getrieben durch die Feder **76** in die entriegelnde Stellung bewegt (Fig. 9). Beim Verriegeln durch den Betätigungshebel **35** schiebt ein Hilfsarm **77** des Betätigungshebels **35** das Gestänge **70** entgegen der radialen Richtung **68.** Der Hilfsarm **77** ist vorzugsweise von dem Gestänge **70** solange entkoppelt, wie die Führungswalzen **43** das Ringsägeblatt **1** nicht berühren. Die Führungsnuten **18** können somit ungestört durch eine radial wirkende Kraft auf den Führungsrollen **41** aufliegen und das Ringsägeblatt **1** ausrichten. Erst sobald die Führungswalzen **43** die Führungsnuten **18** an die Führungswalzen **43** anpressen und fixieren, werden die radialen Kräfte durch das Antriebsrad **6** eingeleitet. Der Hilfsarm **77** kann beispielsweise über ein Schwenkgelenk **78** an dem Maschinengehäuse **31** angelegt sein. Der Betätigungshebel **35** verschwenkt ansprechend auf seine Stellung den Hilfsarm **77** in unterschiedliche Stellungen.

Die beispielhafte Mechanik **71** beinhaltet ein Viergelenk, das den Betätigungshebel **35** an die Haube **34** und das Maschinengehäuse **31** angekoppelt sein. Die Haube **34** und der Hilfsarm **77** sind beispielsweise an ortsfesten Gelenken **72, 78** angelegt. Der Betätigungshebel **35** ist an einem von der Haube **34** mitbewegten Gelenk **79** und einem von dem Hilfsarm **77** mitbewegten Gelenk **80** angekoppelt.

Das Ringsägeblatt **1** wird im Betrieb durch eine Wasserspülung **81** mit Wasser gespült. Das Wasser kühlt die Schneidelemente **3.** Das Kühlen ist insbesondere bei den wärmeempfindlichen diamanthaltigen Schneidelementen **3** notwendig. Nachteilig an der Verwendung von Wasser zum Kühlen ist, dass sich das Wasser mit dem beim Sägen entstehenden Staub zu einem Schlamm vermischt. Der Schlamm wird von dem Ringsägeblatt **1** teilweise aufgenommen und in die Ringsäge **2** transportiert. Der abrasiv wirkende Schlamm trägt zum Verschleiß insbesondere der bewegten Elemente bei.

Eine Ausführungsform der Ringsäge **2** mindert den Verschleiß mittels des Wassers. Das Wasser wird innerhalb des Aufnahmeraums **33** der Werkzeughalterung **5** angrenzend an der Führungsrolle **41** zugeführt. Das noch saubere Wasser umspült die Wälzkörper **46, 47** der Führungsrolle **41.** Die mechanisch stark belasteten Kontaktbereiche können schlammfrei gehalten werden oder zumindest ist der Schlammeintrag an den Kontaktbereichen vermindert. In einer bevorzugten Ausführungsform liegen die Wälzkörper **46, 47** in der Strömungsrichtung des Wassers vor dem Aufnahmeraum **33.** Das Wasser umfließt zumindest einen Abschnitt der Wälzkörper **46,** bevor das Wasser in Kontakt mit Staub, Schlamm, etc. in dem Aufnahmeraum **33** gelangt.

Das Wasser wird von einer externen Wasserversorgung **82** bereitgestellt. Die Wasserversorgung **82** kann unter anderem einen befüllten Tank oder fließendes Wasser aus einem öffentlichen oder privates Wasserversorgungsnetz beinhalten. Die Wasserversorgung **82** kann das verwendete Wasser auffangen, filtern und erneut zuführen. Das Wasser steht vorzugsweise unter Druck, z.B. aufgrund einer erhöhten Lage des Tanks oder einer druckerhöhenden Pumpe. Die Ringsäge **2** hat einen Wasseranschluss **83** zum Anschließen an die Wasserversorgung **82.** Kanäle **84** in der Ringsäge **2** leiten das Wasser von dem Wasseranschluss **83** in den Aufnahmeraum **33** der Werkzeughalterung **5.** Das Wasser tritt vorzugweise an oder nahe der Führungsrollen **41** in den Aufnahmeraum **33** ein. Beispielsweise wird das Wasser über den Topf **53** zugeführt, in welchem die Wälzkörper **46, 47** angeordnet sind. Das Wasser strömt über die Wälzkörper **46, 47** in den Aufnahmeraum **33.** Der Wälzkörper **46** liegt somit in Strömungsrichtung des einfließenden Wassers vor dem Aufnahmeraum **33.** Insbesondere fließt das Wasser über die hochbelasteten Mantelflächen **49** in den Aufnahmeraum **33.** Ein Auslass **85** des Kanals **84** ist beispielsweise auf die Mantelfläche **49** oder auf eine vom Aufnahmeraum **33** abgewandte Fläche **86** des Wälzkörpers **46** gerichtet. Der Kanal **84** kann einen helixförmigen Abschnitt **87** aufweisen. Der helixförmige Abschnitt **87** ist um die Drehachse **48** der Führungsrolle **41** angeordnet. Der Abschnitt **87** kann beispielsweise zwischen einem Lagerbock **88** für den äußeren Wälzkörper **46** und der Wand des Topfs **53** angeordnet sein.

## Patentansprüche

1. Ringsäge (2) mit:
einer Werkzeughalterung (5) zum Führen eines Ringsägeblatts (1),
einem Aufnahmeraum (33), in welchem die Werkzeughalterung (5) angeordnet ist,
einem Motor (30),
einem Antriebsrad (6) das zum Antreiben des Ringsägeblatts (1) in der Schneidebene (E) angeordnet und mit dem Motor (30) gekoppelt ist,
wenigstens einer Führungsrolle (41), die auf einer Seite der Schneidebene (E) zum Führen des Ringsägeblatts (1) von der einen Seite angeordnet ist,
einer Wasserspülung (81) **dadurch gekennzeichnet, dass**
ein Auslass (85) der Wasserspülung (81) auf die Führungsrolle (41) gerichtet ist.

2. Ringsäge (2) nach Anspruch 1, **dadurch gekennzeichnet, dass** die Führungsrolle (41) in Strömungsrichtung der Wasserspülung (81) vor dem Aufnahmeraum (33) angeordnet ist.

3. Ringsäge (2) nach Anspruch 1 oder 2, **dadurch gekennzeichnet, dass** die Führungsrolle (41) einen zylindrischen Wälzkörper (46) zum Eingreifen in Führungsnuten (18) des Ringsägeblatts (1) aufweist, und der Auslass (85) auf eine Mantelfläche (49) des Wälzkörpers (55) oder eine von Schneidebene (E) abgewandte Fläche (86) gerichtet ist.

4. Ringsäge (2) nach Anspruch 3, **dadurch gekennzeichnet, dass** die Wälzkörper (46) in einem Topf (53) angeordnet sind, welcher gegenüber einem Maschinengehäuse (31) abgedichtet ist und eine zu dem Aufnahmeraum (33) hinweisende Öffnung (54) aufweist.

5. Ringsäge (2) nach Anspruch 4, **dadurch gekennzeichnet, dass** ein Segment der Wälzkörper (46) innerhalb des Aufnahmeraums (33) und ein Segment der Wälzkörper (46) innerhalb des Topfs (53) angeordnet ist.

6. Ringsäge (2) nach Anspruch 4 oder 5, **dadurch gekennzeichnet, dass** die Öffnung (54) kleiner als ein Querschnitt des Wälzkörpers (55) ist.

7. Ringsäge (2) nach einem der Ansprüche 4 bis 6, **dadurch gekennzeichnet, dass** der Auslass (85) innerhalb des Topfs (53) angeordnet ist.

8. Ringsäge (2) nach Anspruch 1 bis 7, **gekennzeichnet durch** einen Kanal (84), welcher mit dem Auslass (85) verbunden ist, wobei der Kanal (84) einen helixförmigen, um eine Drehachse (48) der Führungsrolle (41) verlaufenden Abschnitt aufweist.
